# EUROPÄISCHE PATENTANMELDUNG

(11) **EP 4 681 850 A1**
(43) Veröffentlichungstag der Anmeldung: **21.01.2026**
(21) Anmeldenummer: 24189204.1
(22) Anmeldetag: 17.07.2024
(51) Int. Cl.: B23D 57/00, B22F 5/00

(54) **SIMULTANES DRAHTSCHNEIDEN VON ADDITIV HERGESTELLTEN METALLISCHEN KOMPONENTEN ZUR VERWENDUNG ALS AUTOMOBILABGASVORHEIZELEMENTE**

(71) Anmelder: AM Global Holding GmbH, 82319 Starnberg (DE)
(72) Erfinder: Zierhut, Nel, 41464 Neuss (DE)

(57) **Zusammenfassung**

Die Erfindung betrifft ein Verfahren zum Abtrennen mindestens eines Teils von einem metallischen Körper (10), umfassend ein Drahtschneiden des metallischen Körpers (10).

## Beschreibung

Die vorliegende Erfindung betrifft ein Verfahren zum Abtrennen mindestens eines Teils von einem metallischen Körper, umfassend ein Drahtschneiden des metallischen Körpers. Das mindestens eine abgetrennte Teil kann in einem Automobilabgasvorheizsystem verwendet werden.

Verfahren und Vorrichtungen zum Drahtschneiden unter Verwendung einer Drahtsäge sind bekannt. Beispielsweise betrifft die DE 10 2012 101 251 A1 ein Verfahren und eine Drahtsäge zum Abtrennen einer Mehrzahl von Halbleiterscheiben von einem Halbleitermaterial-Rohblock. Die DE 10 2012 101 251 A1 beschreibt, wie beim sogenannten Drahtschneiden zur Bildung einer Drahtgruppe ein sich bewegender Draht um eine Mehrzahl von mit Nuten versehenen Walzen läuft, wobei die Drahtgruppe eine Mehrzahl von parallel zueinander verlaufenden und eine Ebene aufspannenden Teilabschnitten des sich bewegenden Drahtes umfasst, wobei Teile eines Grundkörpers durch Relativbewegung des Grundkörpers und der Drahtgruppe abgetrennt werden (auch Multi Wire Cutting (MWC) genannt).

Die DE 198 55 895 A1 beschreibt ein Verfahren zur Reinigung eines Siliciumwafers während eines Verfahrens zur Herstellung von Halbleiterteilen unter Verwendung einer Chlorwasserstoffsäure/Wasserstoffperoxid-Mischung.

Halbleiter unterscheiden sich in ihre Struktur und ihren Eigenschaften von Metallen.

In Anbetracht immer strenger werdender Abgasnormen sind technische Innovationen nötig, um die gesetzlichen Vorgaben zu erfüllen. Ein signifikanter Teil an Schadstoffen wird unmittelbar nach dem Starten eines Automobils ausgestoßen, weil der Abgaskatalysator die Temperatur, bei der er seine Wirkung entfaltet, noch nicht erreicht hat.

Der zugrundeliegenden Erfindung liegt als eine Aufgabe zu Grunde, ein Verfahren bereitzustellen, mit dem in schneller Zeit eine hohe Anzahl definierter metallischer Flachelemente zur Verwendung als Automobilabgasvorheizelemente hergestellt werden können. Metallische Flachelemente können als Automobilabgasvorheizelemente verwendet werden, die Automobilabgase unmittelbar nach dem Starten des Automobils auf eine Temperatur erwärmen, bei der der Abgaskatalysator seine Wirkung entfalten kann. Eine weitere Aufgabe der vorliegenden Erfindung liegt darin, ein erfindungsgemäß hergestelltes Flachelement und ein Vorheizsystem, umfassend das erfindungsgemäß hergestellte Flachelement, anzugeben. Eine weitere Aufgabe der vorliegenden Erfindung liegt darin, eine Vorrichtung zum Abtrennen mindestens eines Teils von einem metallischen Körper und ein System, enthaltend diese Vorrichtung, anzugeben.

Erfindungsgemäß kann zumindest eine Aufgabe der vorliegenden Erfindung zumindest nach einem Verfahren nach Anspruch 1 gelöst werden, also durch ein Verfahren zum Abtrennen mindestens eines Teils von einem metallischen Körper, umfassend ein Drahtschneiden des metallischen Körpers.

Die Erfinder haben festgestellt, dass das erfindungsgemäße Verfahren das schnelle und effiziente Abtrennen von Teilen von einem metallischen Körper (Grundkörper) ermöglicht. Ermöglicht wird insbesondere ein hochgenaues Heraustrennen einer Vielzahl definierter Teile mit geringer Höhe aus einem vorgegebenen Körper.

Wie eingangs beschrieben ist das "Drahtschneiden" dem Fachmann bekannt. In einer bevorzugten Ausführungsform beschreibt der Begriff Drahtschneiden das Schneiden des metallischen Grundkörpers durch ein Drahtfeld aus nebeneinander geführten Drähten. Die Drähte sind dabei mit einer tribologischen Paste oder Schleifemulsion benetzt.

Ausführungsformen innerhalb dieser Schrift können beliebig miteinander kombiniert werden, sofern sich aus dem Gegenstand und der Beschreibung der Ausführungsformen nicht eindeutig Gegenteiliges ergibt.

Die Verben "enthalten" und "umfassen" und ihre Konjugationen enthalten auch das Verb "bestehen aus" mit seinen Konjugationen.

Bevorzugte Ausführungsformen sind auch in den Patentansprüchen wiedergegeben.

Vorzugsweise werden beim Drahtschneiden mindestens zwei Teile, vorzugsweise eine Vielzahl von Teilen, simultan von dem metallischen Körper abgetrennt. Eine Vielzahl kann beispielsweise mindestens zehn oder mindestens 25 Teile bezeichnen.

Das erfindungsgemäße Verfahren stellt eine zeit- und kostengünstige Alternative zum Drahterodieren einzelner Teile dar.

Vorzugsweise ist das Teil ein metallisches Flachelement beziehungsweise die Teile sind metallische Flachelemente, vorzugsweise für ein Vorheizsystem, besonders bevorzugt für ein Automobilabgasvorheizsystem. Ein Flachelement ist dadurch gekennzeichnet, dass es in Relation zu seiner Breite und Länge eine geringe Höhe aufweist. Beispielsweise kann die Höhe des Teils weniger als 1/5 der Länge und weniger als 1/5 der Breite des Teils betragen. Bevorzugt beträgt die Höhe des Teils weniger als 1/10 der Länge und weniger als 1/10 der Breite des Teils. Bei einem runden Teil kann die Höhe des Teils weniger als 1/5 des Durchmessers des Teils betragen, bevorzugt weniger als 1/10 des Durchmessers.

In einer bevorzugten Ausführungsform ist der metallische Körper ein additiv gefertigter, metallischer Körper. Additiv gefertigte, metallische Körper sind interessant, weil über einen additiv gefertigten, metallischen Körper eine große Vielfalt komplexer Formen erreicht werden können. Insbesondere weisen Flachelemente für Vorheizsysteme häufig komplexe feine Strukturen auf, um eine große Kontaktfläche zum Wärmeaustausch zu bieten. Mit anderen Worten, in einer Ausführungsform umfasst das Verfahren vor dem Drahtschneiden des metallischen Körpers die additive Fertigung des metallischen Körpers.

Der metallische Körper ist ein metallischer Körper. Der metallische Körper ist kein Halbleiter. Der metallische Körper besteht nicht aus einem Halbleiter.

In einer bevorzugten Ausführungsform besteht der metallische Körper aus einer Legierung.

In einer bevorzugten Ausführungsform besteht der metallische Körper aus einer Legierung, die mindestens 50 Gew.-% Übergangsmetall enthält.

In einer bevorzugten Ausführungsform besteht der metallische Körper aus einer Legierung, deren Hauptbestandteil bezogen auf Gew.-% Nickel ist.

In einer bevorzugten Ausführungsform besteht der metallische Körper aus einer Legierung, die 40 Gew.-% bis 70 Gew.% Nickel, 10 Gew.-% bis 30 Gew.-% Chrom und 3 Gew.-% bis 15 Gew.-% Molybdän enthält. Inconel 625 (UNS Bezeichnung N06625), eine Legierung die folgende Zusammensetzung aufweist, ist in einer Ausführungsform besonders bevorzugt:

| Element | Gew.-% |
|---|---|
| Cr | 20,00 - 23,00 |
| Mo | 8,00 - 10,00 |
| Fe | max. 5,0 |
| Nb + Ta | 3,15 - 4,15 |
| Mn | max. 0,50 |
| Si | max. 0,50 |
| Al | max. 0,40 |
| Ti | max. 0,40 |
| C | max. 0,10 |
| Ni | min. 58* |

| | |
|---|---|
| *wobei der Rest Nickel und unvermeidbare Verunreinigungen sind. | |

In einer bevorzugten Ausführungsform erfolgt das Drahtschneiden unter Verwendung einer tribologischen Paste.

In einer bevorzugten Ausführungsform ist der metallische Körper während des Drahtschneidens über eine Klebstoffschicht mit einer Opferplatte verbunden, wobei die Klebstoffschicht nach dem Drahtschneiden aufgelöst wird. Der metallische Körper kann also mit einer Opferplatte verklebt werden. Das Drahtfeld kann bis in die Opferplatte schneiden. Durch das Auflösen der Klebstoffschicht in heißem Wasser werden die erhaltenen Teile bzw. Flachelemente von der Opferplatte getrennt. Das Verkleben kann automatisch oder manuell erfolgen.

In einer bevorzugten Ausführungsform ist der metallische Körper ein Metallblock mit Gitterstruktur, beispielsweise mit mäanderförmiger Gitterstruktur. Eine Gitterstruktur des Grundköpers führt zu einem Produkt mit großer Oberfläche zum Wärmeaustausch. Außerdem kann die Gitterstruktur zu einer Abfederung der Schneidkraft führen. Mit anderen Worten, der der metallische Körper ist in einer bevorzugten Ausführungsform derart ausgebildet, dass der metallische Körper während des Drahtschneidens eine Schneidkraft abfedert. In einer Ausführungsform ist die Ausrichtung der Bauteile auf der Trägerplatte derart, dass die Gitterstrukturen in etwa 45° zum Drahtschneidfeld stehen.

Diese Ausrichtung ermöglicht, dass Vibrationen im Bauteil verringert werden können, da ein homogenerer Schnitt durch die Gitterstruktur, insbesondere Gitterstruktur in Mäanderform, erreicht werden kann.

In einer bevorzugten Ausführungsform umfasst das Verfahren nach dem Drahtschneiden ein Entfernen von Metall von Schneidflächen. Bei dem zu entfernenden Metall handelt es sich insbesondere um Grat, insbesondere Flittergrat. Durch das Abtrennen einzelner Teile von einem metallischen Körper mittels Erodieren oder (Multi-)Drahtschneiden entsteht meist ein Flittergrat an sämtlichen Wandungen des Bauteils. Je nach Orientierung des Trennschnittes zur internen Bauteilgeometrie bzw. internen Bauteilwandungen kann der Flittergrad reduziert, jedoch nicht ganz abgestellt werden. Das Entfernen von Metall, insbesondere von Grat und Flittergrat, kann also eine Reinigung darstellen, die eine Fluidzirkulation durch das Bauteil verbessern kann. Vorzugsweise erfolgt das Entfernen von Metall, insbesondere von Grat und Flittergrat, durch Eintauchen in eine saure, oxidierende Lösung. Vorzugsweise erfolgt das Eintauchen über einen Zeitraum von mindestens 10 Sekunden, bevorzugt mindestens 30 Sekunden, weiter bevorzugt mindestens 1 Minute, insbesondere bevorzugt mindestens 1,5 Minuten. Vorzugsweise erfolgt das Eintauchen über einen Zeitraum bis höchstens 30 Minuten, bevorzugt höchstens 15 Minuten, weiter bevorzugt höchstens 10 Minuten, insbesondere bevorzugt höchstens 4 Minuten. Vorzugsweise erfolgt das Entfernen von Metall, insbesondere von Grat und Flittergrat, unter Verwendung einer Lösung, die Salzsäure und Wasserstoffperoxid enthält. Die Erfinder haben festgestellt, dass diese Bedingungen und eine Lösung, die Salzsäure und Wasserstoffperoxid enthält, am besten geeignet sind.

Die vorliegende Erfindung stellt auch ein Flachelement, vorzugsweise für ein Vorheizsystem, besonders bevorzugt für ein Automobilabgasvorheizsystem, bereit, wobei das Flachelement durch ein erfindungsgemäßes Verfahren hergestellt ist.

Durch das erfindungsgemäße Verfahren können die erhaltenen Flachelemente eine besonders komplexe und feine Struktur aufweisen. Durch das Entfernen von Metall, insbesondere von Grat und Flittergrat, von Schneidflächen wird ein besonders feines und leistungsfähiges Produkt erhalten, das durch die gegebenenfalls stattfindende chemische Reinigung bzw. Behandlung gegebenenfalls noch modifiziert wird.

Die vorliegende Erfindung stellt auch ein Vorheizsystem, bevorzugt ein Automobilabgasvorheizsystem, bereit, das ein durch das erfindungsgemäße Verfahren hergestellte Flachelement umfasst.

Die vorliegende Erfindung stellt auch eine Vorrichtung zum Abtrennen mindestens eines Teils von einem metallischen Körper, vorzugsweise zur Durchführung eines erfindungsgemäßen Verfahrens, bereit, umfassend eine Drahtschneidevorrichtung zum Drahtschneiden des metallischen Körpers. Vorzugsweise umfasst die Drahtschneidevorrichtung eine Mehrzahl von mit Nuten versehenen Walzen und einen Draht. Vorzugsweise ist die Vorrichtung geeignet, mindestens zwei Teile, vorzugsweise eine Vielzahl von Teilen, simultan von dem metallischen Körper abzutrennen.

Die vorliegende Erfindung stellt auch ein System bereit, umfassend die erfindungsgemäße Vorrichtung sowie den metallischen Körper. Vorzugsweise ist der metallischen Körper des erfindungsgemäßen Systems über eine Klebstoffschicht mit einer Opferplatte verbunden.

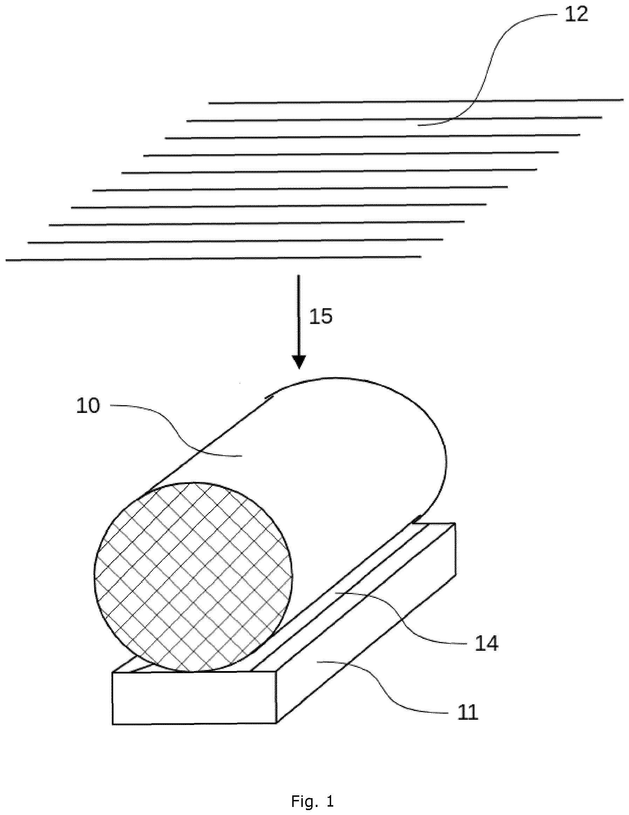

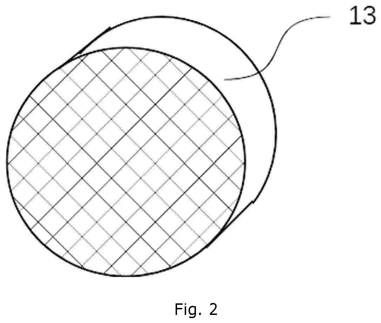

Nachfolgend wird die Erfindung an Hand eines Beispiels und mit Verweis auf Fig. 1 und Fig. 2 näher erläutert, wobei das Beispiel nicht beschränkend sein soll.

Zunächst wird ein additiv gefertigter, metallischer Körper 10 bereitgestellt, der aus Inconel 625 besteht. Mit anderen Worten, der metallische Körper besteht aus einer Legierung, die folgende Elemente enthält:

| Element | Gew.-% |
|---|---|
| Cr | 20,00 - 23,00 |
| Mo | 8,00 - 10,00 |
| Fe | max. 5,0 |
| Nb + Ta | 3,15 - 4,15 |
| Mn | max. 0,50 |
| Si | max. 0,50 |
| Al | max. 0,40 |
| Ti | max. 0,40 |
| C | max. 0,10 |
| Ni | min. 58* |

| | |
|---|---|
| *wobei der Rest Nickel und unvermeidbare Verunreinigungen sind. | |

Die additive Fertigung erfolgte derart, dass der metallische Körper 10 eine Gitterstruktur aufweist, wobei der metallische Körper 10 nach außen die Form eines Zylinders aufweist.

Am metallischen Körper 10 wird ein Drahtschneiden durchgeführt. Hierzu wird der metallische Körper 10 mit einer Opferplatte 11 verklebt. Die Verklebung erfolgt mittels Klebstoffschicht 14 auf der Opferplatte 11.

Beim Drahtschneiden wird der metallische Körper 10 wie in Fig. 1 dargestellt durch ein Drahtfeld 12 aus zehn nebeneinander geführten Drähten geschnitten. Die Drähte sind dabei mit einer tribologischen Paste benetzt. Es wird entlang der Schneiderichtung 15 von oben bis in die Opferplatte 11 geschnitten. Beim Drahtschneiden werden zehn Teile 13 simultan von dem metallischen Körper 10 abgetrennt.

Ein abgetrenntes Teil 13 ist in Fig. 2 dargestellt. Bei den abgetrennten Teilen 13 handelt es sich um kreisrunde, metallische Flachelemente. Die Höhe der Teile 13 beträgt 4,1 mm, der Durchmesser 16 cm (Zeichnung nicht dimensionstreu). Die Teile 13 stellen bei entsprechender Montage Automobilabgasvorheizsysteme dar.

Nach dem Drahtschneiden wird die Klebstoffschicht durch heißes Wasser aufgelöst. Durch das Auflösen der Klebstoffschicht in heißem Wasser werden die erhaltenen Teile bzw. Flachelemente 13 von der Opferplatte 11 getrennt und können entnommen werden.

Im Anschluss wird Flittergrat von den Schneidflächen entfernt. Das Entfernen erfolgt durch Eintauchen in eine Lösung, die Salzsäure und Wasserstoffperoxid enthält, über einen Zeitraum von 3 Minuten.

Die Erfindung ermöglicht das wirtschaftliche und simultane Trennen von Bauteilen mit komplexer und feiner Struktur in hoher Stückzahl in kurzer Zeit mit hoher Genauigkeit.

### Bezugszeichenliste

- 10: additiv gefertigter, metallischer Körper
- 11: Opferplatte
- 12: Drahtfeld aus nebeneinander geführten Drähten
- 13: Teil bzw. metallisches Flachelement
- 14: Klebstoffschicht
- 15: Schneiderichtung

## Patentansprüche

1. Verfahren zum Abtrennen mindestens eines Teils von einem metallischen Körper, umfassend:
ein Drahtschneiden des metallischen Körpers.

2. Verfahren nach Anspruch 1, **dadurch gekennzeichnet, dass** beim Drahtschneiden mindestens zwei Teile, vorzugsweise eine Vielzahl von Teilen, simultan von dem metallischen Körper abgetrennt werden.

3. Verfahren nach einem der vorherigen Ansprüche, **dadurch gekennzeichnet, dass** das Teil ein metallisches Flachelement ist bzw. die Teile metallische Flachelemente sind, vorzugsweise für ein Vorheizsystem, besonders bevorzugt für ein Automobilabgasvorheizsystem.

4. Verfahren nach einem der vorherigen Ansprüche, **dadurch gekennzeichnet, dass** der metallische Körper aus einer Legierung besteht, die mindestens 50 Gew.-% Übergangsmetall enthält.

5. Verfahren nach einem der vorherigen Ansprüche, **dadurch gekennzeichnet, dass** das Drahtschneiden unter Verwendung einer tribologischen Paste erfolgt.

6. Verfahren nach einem der vorherigen Ansprüche, **dadurch gekennzeichnet, dass** der metallische Körper während des Drahtschneidens über eine Klebstoffschicht mit einer Opferplatte verbunden ist, wobei die Klebstoffschicht nach dem Drahtschneiden aufgelöst wird.

7. Verfahren nach einem der vorherigen Ansprüche, **dadurch gekennzeichnet, dass** der metallische Körper ein Metallblock mit Gitterstruktur, vorzugsweise mit mäanderförmiger Gitterstruktur, ist.

8. Verfahren nach einem der vorherigen Ansprüche, **dadurch gekennzeichnet, dass** das Verfahren nach dem Drahtschneiden ein Entfernen von Grat von Schneidflächen umfasst.

9. Verfahren nach Anspruch 8, **dadurch gekennzeichnet, dass** das Entfernen von Grat durch Eintauchen in eine saure, oxidierende Lösung erfolgt.

10. Verfahren nach Anspruch 9, **dadurch gekennzeichnet, dass** das Eintauchen vorzugsweise über einen Zeitraum von mindestens 10 Sekunden, bevorzugt mindestens 30 Sekunden, weiter bevorzugt mindestens 1 Minute, insbesondere bevorzugt mindestens 1,5 Minuten bis höchstens 30 Minuten, bevorzugt höchstens 15 Minuten, weiter bevorzugt höchstens 10 Minuten, insbesondere bevorzugt höchstens 4 Minuten, erfolgt.

11. Verfahren nach einem der Ansprüche 8 bis 10, **dadurch gekennzeichnet**, das Entfernen von Grat unter Verwendung einer Lösung erfolgt, die Salzsäure und Wasserstoffperoxid enthält.

12. Flachelement, vorzugsweise für ein Vorheizsystem, besonders bevorzugt für ein Automobilabgasvorheizsystem, wobei das Flachelement durch ein Verfahren nach einem der Ansprüche 1-11 hergestellt ist.

13. Vorheizsystem, bevorzugt Automobilabgasvorheizsystem, umfassend das Flachelement nach Anspruch 12.

14. Vorrichtung zum Abtrennen mindestens eines Teils von einem metallischen Körper, vorzugsweise zur Durchführung eines Verfahrens nach einem der obigen Verfahrensansprüchen, umfassend:
eine Drahtschneidevorrichtung zum Drahtschneiden des metallischen Körpers.

15. System, umfassend die Vorrichtung nach dem unmittelbar vorhergehenden Anspruch sowie den metallischen Körper.
